(19) Europäisches Patentamt

European Patent Office

Office européen des brevets

(11) **EP 3 174 217 A1**

(12) **EUROPEAN PATENT APPLICATION**

(43) Date of publication:
**31.05.2017 Bulletin 2017/22**

(51) Int Cl.:
*H04B 7/04* (2017.01)　　　*H04B 17/30* (2015.01)

(21) Application number: **15196048.1**

(22) Date of filing: **24.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• RUSEK, Fredrik
  16440 Kista (SE)
• CHEN, Jianjun
  16440 Kista (SE)

(74) Representative: **Körber, Martin Hans et al**
**Mitscherlich PartmbB**
**Patent- und Rechtsanwälte**
**Sonnenstrasse 33**
**80331 München (DE)**

(54) **DEVICE AND METHOD FOR CHARACTERIZING A SIGNAL**

(57)　　The present invention provides a device 200 for characterizing a signal received from a serving base station, BS, in the presence of an interfering BS. The device 200 is configured to determine, from the signal, resource elements (REs) of a physical resource block (PRB) which both the serving BS 101 and the interfering BS 102 use for transmitting data, form a sample covariance over the determined REs, and form a cost function based on the sample covariance and an exact covariance over the determined REs. Further, the device 200 is configured to calculate a gradient of the cost function with respect to a precoding matrix at a center of mass of precoding matrices available at the interfering BS 102, and at a center of mass of power levels available at the interfering BS 102, compare the gradient with a plurality of vectors, each vector being formed by a combination of a precoding matrix and power level available at the interfering BS 102, and determine a set of vectors, which have a direction that differs from the gradient by less than a threshold value. Finally, the device 200 is then configured to compute, from the set of vectors, a precoding matrix and power level used by the interfering BS 102.

Fig. 2

**Description**

TECHNICAL FIELD

The present invention relates to a device and method for characterizing a signal received from a serving base station (BS) in the presence of an interfering BS. In particular, the device and method enable an analysis of the signal for parameters set by the interfering BS, particularly for a precoding matrix and a power level used by the interfering BS for transmitting data.

BACKGROUND

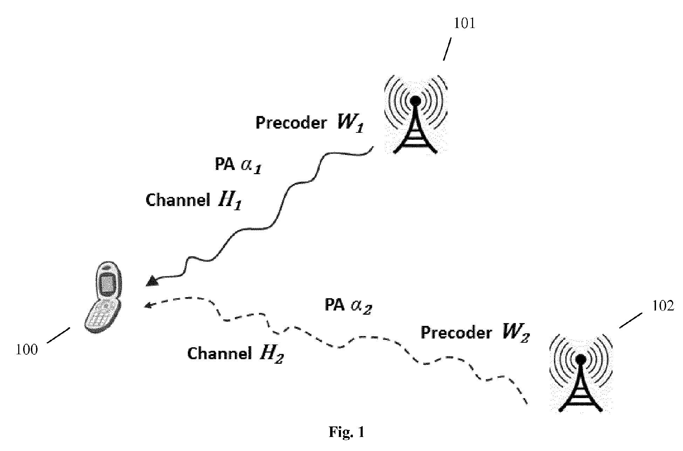

It is a well known problem in wireless telecommunications, like LTE, that e.g. user equipment (UE) receives a signal, like an LTE or LTE-like signal, from a serving BS in the presence of another signal originating from an interfering BS. That is, a part of the signal received by the UE stems from the serving BS, while an interference part of the received signal stems from the interfering BS. A schematic overview of such a situation is illustrated in Fig. 1. Specifically, in Fig. 1 a UE 100, exemplarily depicted as a mobile phone, receives a signal from a serving BS 101. An interfering BS 102, which also transmits a signal, in effect directed to another UE, interferes with the signal of the serving BS.

Due to this interference, it is now particularly problematic for a demodulator, for instance at the UE 100, to demodulate the whole received signal. That is, a demodulator trying to demodulate the signal from the serving BS 101 must be aware of certain parameters, which are used by the interfering BS 102 and which impact on the received signal. In particular, as will be shown below in more detail, in order to determine an amount of interference and noise caused by the interfering BS 102 to the received signal, and thus to achieve an optimal demodulation result, the demodulator needs to know a precoding matrix $\mathbf{W}_2$ and power level $\alpha_2$ used by the interfering BS 102.

In, for example, an LTE or LTE-like signal a smallest block of data is termed a pair of resource blocks or a physical resource block (PRB). Each PRB is usually broken down into resource elements (REs). In each PRB there are typically 168 REs, which correspond to 12 sub-carriers arranged in a frequency domain, and further to 14 time intervals arranged in a time domain. Some of the 168 REs contain pilot symbols, which REs are usually known to the receiving UE 100, while the remaining REs contain data. Unfortunately, the positions of the pilot symbols may be different for the serving BS 101 and the interfering BS 102.

The received signal $\mathbf{y}$ for a selected RE of a specific PRB in the situation of Fig. 1 can be described by the following formula (1), which depends on several parameters of the interfering BS 102:

$$\mathbf{y}_{kl} = \alpha_1 \mathbf{H}_1 \mathbf{W}_1 \mathbf{x}_{kl} + \alpha_2 \mathbf{H}_2 \mathbf{W}_2 \mathbf{z}_{kl} + \mathbf{n}_{kl} \qquad (1)$$

Specifically, in the above formula (1):

- (k, 1) denotes the $k^{th}$ sub-carrier and the $l^{th}$ time interval in the selected RE.
- The subscript "1" refers to the serving BS, and the subscript "2" refers to the interfering BS, as shown in Fig. 1.
- $\alpha_k$ are power levels adjusted by the respective BSs, as shown in Fig. 1.
- $\mathbf{H}_k$ are wireless MIMO channels from the respective BSs to the UE. Here, it is assumed that all channels are 4x4 matrices. Further, it is assumed that the channels remain constant across one PRB, so that they are not indexed with (k, 1) in the formula (1).
- $\mathbf{W}_k$ are precoding matrices, which are selected from a well-defined and finite list of available precoding matrices at the respective BSs. The used precoding matrices are shown in Fig. 1.
- $\mathbf{x}_{k1}$ is a signal vector transmitted from the serving BS at a RE position (k, 1). Depending on this RE position (k, 1), the transmission can be either of pilot symbols or of data. The receiving UE usually knows the locations of data within a PRB.
- $\mathbf{z}_{k1}$ is a signal vector transmitted from the interfering BS at a RE position (k, 1). Depending on this RE position (k, 1), the transmission can be either of pilot symbols or of data. Again, the UE typically knows the locations of data within a PRB.

An additional technical difficulty in characterizing the signal of formula (1) for parameters of the interfering BS 102, particularly for the precoding matrix $\mathbf{W}_2$ and power level $\alpha_2$, is that power levels $\alpha$ and precoding matrices $\mathbf{W}$ are usually different at data and pilot positions. Further, the pilot positions may not be the same for both the BSs 101 and 102.

At least, the following assumptions are possible:

- From the REs, which the serving BS 101 uses to transmit pilot symbols, the serving channel matrix $\mathbf{H}_1$ can be (perfectly) estimated.
- From the REs, which the interfering BS 102 uses to transmit pilot symbols, the interfering channel matrix $\mathbf{H}_2$ can be (perfectly) estimated.
- From a serving cell control signalling, the precoding matrix $\mathbf{W}_1$ and the power level $\alpha_1$ of the serving BS 101 are known.

However, even after making the above assumptions, the two most important parameters needed to characterize the received signal for the influence of the interfering BS 102 still remain unknown, namely the precoding matrix $\mathbf{W}_2$ and the power level $\alpha_2$.

The reason for these two parameters being the most important is, that a demodulator, which is trying to demodulate the serving data $\mathbf{x}_{k,1}$, must know the covariance of the interference and noise, in order to yield optimal results. The covariance can be expressed by the following formula (2):

$$R_{\mathbf{yy}} = \alpha_1^2 \mathbf{H}_1 \mathbf{W}_1 \mathbf{W}_1^H \mathbf{H}_1^H + \alpha_2^2 \mathbf{H}_2 \mathbf{W}_2 \mathbf{W}_2^H \mathbf{H}_2^H + N_0 \mathbf{I} \qquad (2)$$

As can be seen, the covariance includes the remaining unknown parameters $\mathbf{W}_2$ and $\alpha_2$ of the interfering BS 102. That is, without detecting these two parameters, the covariance $R_{yy}$ cannot be exactly obtained, and perfect results cannot be achieved. It is noted in this respect, that for practical implementations it is most of the times sufficient to determine $R_{yy}$, and not the individual parameters $\mathbf{W}_2$ and $\alpha_2$. However, the individual detection of $\mathbf{W}_2$ and $\alpha_2$ itself is additionally beneficial, and in any case be used for calculating $R_{yy}$.

For obtaining the remaining two parameters $\mathbf{W}_2$ and $\alpha_2$, or at least the covariance $R_{yy}$, it is particularly problematic in LTE that there exist 64 different precoding matrices $\mathbf{W}$ and 9 different values of the power level $\alpha$ (which includes $\alpha=0$, meaning that the interfering BS is silent), which are available for a BS to choose. That means a large amount of combinations is selectable by the interfering BS 102.

Conventional devices and methods carry out an exhaustive search over all available precoding matrices and power levels at this point, in order to obtain the two remaining parameters $\mathbf{W}_2$ and $\alpha_2$. For the calculation, first a sample covariance matrix over all data RE reads, i.e. over all REs, which both BSs use for transmitting data, is calculated according to the following formula (3):

$$\hat{R}_{\mathbf{yy}} = \frac{1}{N} \sum_{k,l} \mathbf{y}_{kl} \mathbf{y}_{kl}^H \qquad (3)$$

In the above formula (3), N is the number of data RE reads.

Then, an exact covariance is formed, as expressed according to the following formula (4);

$$R_{\mathbf{yy}} = \alpha_1^2 \mathbf{H}_1 \mathbf{W}_1 \mathbf{W}_1^H \mathbf{H}_1^H + \alpha_2^2 \mathbf{H}_2 \mathbf{W}_2 \mathbf{W}_2^H \mathbf{H}_2^H + N_0 \mathbf{I} \qquad (4)$$

Thereafter, a minimization problem as expressed by the following formula (5) is solved, in order to determine the exact covariance and the remaining parameters $\mathbf{W}_2$ and $\alpha_2$:

$$\arg\min_{\mathbf{W}_2, \alpha_2} \left\| \hat{R}_{\mathbf{yy}} - R_{\mathbf{yy}} \right\|^2 \qquad (5)$$

Unfortunately, the exhaustive search for finding a solution to the above-described minimization problem, as it is carried out by conventional devices and methods, is of high complexity, slow and inefficient. The large complexity of the problem is due to the multiple possible combinations of $\mathbf{W}_2$ and $\alpha_2$.

Although a further simplification of the problem is possible, the complexity still remains high. The further simplification bases on the fact that there are 64 different choices for the precoding matrix $\mathbf{W}_2$, but that there are only 49 distinct values of the product $\mathbf{W}_2\mathbf{W}_2^H$, which is the only quantity that plays a role for determining the exact covariance $R_{yy}$.

Together with the 9 choices for the power level $\alpha_2$, this still leaves at least 9 x 49 = 441 metrics $\|\hat{R}_{yy} - R_{yy}\|^2$ that must be evaluated by the exhaustive search.

SUMMARY

In view of the above-mentioned problems and disadvantages, the present invention aims to improve the conventional devices and methods. The present invention has thereby the object to analyze a signal received from a serving BS in the presence of an interfering BS faster and more efficiently, wherein particularly a precoding matrix and power level used by the interfering BS for transmitting data is to be determined. Accordingly, a specific aim of the present invention is to evaluate more efficiently the possible metrics, for instance the above-mentioned at least 441 metrics.

The object of the present invention is achieved by the solution provided in the enclosed independent claims. Advantageous implementations of the present invention are further defined in the dependent claims.

In particular the present invention proposes a specific pre-computation step, in order to reduce the number of metrics, before carrying out a computation for $W_2$ and $\alpha_2$ by, for instance, exhaustive search. Advantageously, the additional effort associated with the pre-computation step is much smaller than its overall efficiency gain, i.e. in summary the analysis of the received signal for the relevant parameters of the interfering BS is more efficient and significantly faster than conventionally.

A first aspect of the present invention provides a device for characterizing a signal received from a serving base station, BS, in the presence of an interfering BS, the device being configured to: determine, from the signal, resource elements, REs, of a physical resource block, PRB, which both the serving BS and the interfering BS use for transmitting data, form a sample covariance over the determined REs, form a cost function based on the sample covariance and an exact covariance over the determined REs, calculate a gradient of the cost function with respect to a precoding matrix at a center of mass of precoding matrices available at the interfering BS, and at a center of mass of power levels available at the interfering BS, compare the gradient with a plurality of vectors, each vector being formed by a combination of a precoding matrix and power level available at the interfering BS, determine a set of vectors, which have a direction that differs from the gradient by less than a threshold value, compute, from the set of vectors, a precoding matrix and power level used by the interfering BS.

As the precoding matrix in the device of the first aspect can also be used a matrix representative of the precoding matrix, for instance, a Hermetian complex valued matrix formed from the precoding matrix.

The key (pre-computation) step carried out by the device of the first aspect is to regard each combination of a precoding matrix and a power level as one of a plurality of vectors in a multi-dimensional space. Accordingly, the gradient of the cost function can be derived and compared with each of the vectors, preferably in a low-complexity fashion. As result, only a smaller set of vectors, including vectors that point in the same or a similar direction as the gradient, are kept. Then the metrics of the cost function are computed only for the smaller set of vectors, rather than for all vectors, i.e. not, for instance, for all of the above-mentioned at least 441 combinations. Due to the low complexity of the pre-computation step, and the significantly reduced complexity of the final computation step, the precoding matrix and power level used by the interfering BS for transmitting data can be obtained faster and more efficiently.

Thereby, the threshold value can be 'variable' or 'fixed'. Preferably, a predetermined number of vectors is selected, of which a direction differs the least from the direction of the gradient. In this case, the 'variable' threshold is determined by the selected vectors, particularly by the selected vector having the largest difference in direction to the gradient. Alternatively, a 'fixed' threshold can be used, wherein, for instance, all selected vectors have a direction that differs from the direction of the gradient by less than a predetermined value.

The available precoding matrices and power levels are a predetermined set of precoding matrices and power levels that is stored and selectable by a BS. That means a BS can select for each RE a specific precoding matrix and a specific power level from a finite list of available precoding matrices and power levels.

Since the two parameters, i.e. the precoding matrix and power level used by the interfering BS are typically not the same for transmitting data and for transmitting pilot symbols, respectively, and because only the parameters for data transmission are required, the device is configured to initially limit the REs to those REs, which are used by both BSs for transmitting data. Thereby, the device can work even more efficiently.

In a first implementation form of the device according to the first aspect, for comparing the gradient with the plurality of vectors, the device is configured to calculate a projection of the gradient onto each one of the plurality of vectors.

A projection is an efficient, but simple way of comparing two vectors. Here, the gradient is considered as a vector, which can be well and rapidly compared in the above manner with the plurality of vectors. Due to common elements of many of the vectors to be compared, the comparison can be carried out by the device with an overall low complexity. This allows the additional pre-computation step to improve significantly the efficiency of the method, which the device is configured to carry out.

In a second implementation form of the device according to the first implementation form of the first aspect, for determining the set of vectors, the device is configured to select a predetermined number of vectors, for which calculating the projections yields the smallest values.

Thereby, the number of possibilities, for which the final computation for the precoding matrix used by the interfering BS for transmitting data is carried out, is significantly reduced. This reduction makes the device even more efficient and faster.

In a third implementation form of the device according to the second implementation form of the first aspect, the predetermined number of vectors is between 10 and 20, preferably 15.

The above predetermined numbers allow for very accurate results, while the complexity of the whole computation is still reduced by at least 50% compared to conventional devices and methods.

In a fourth implementation form of the device according to the first aspect as such or according to any of the previous implementation forms of the first aspect, for computing the precoding matrix and power level used by the interfering BS, the device is configured to calculate a new center of mass of precoding matrices corresponding to the set of vectors.

The updating of the center of mass allows subsequent steps, which are preferably carried out by the device based on the most recently calculated center of mass of precoding matrices, to achieve even better results in terms of accuracy.

In a fifth implementation form of the device according to the fourth implementation form of the first aspect, for computing the precoding matrix and power level used by the interfering BS, the device is further configured to: calculate a further gradient of the cost function with respect to the precoding matrix at the new center of mass of precoding matrices, compare the further gradient with each vector in the set of vectors, determine a new set of vectors, which have a direction that differs from the direction of the gradient by less than a threshold value, calculate a new center of mass of precoding matrices corresponding to the new set of vectors, and compute, from the new set of vectors, the precoding matrix and power level used by the interfering BS.

With this further iteration of the pre-computation step performed by the device, the number of possibilities, for which finally a computation of the precoding matrix used by the interfering BS to transmit data is carried out, can be reduced further. It is noted that the above-listed steps can also be repeated multiple times for several iterations, each iteration further reducing the number of possibilities, and thus yielding even better the covariance or the unknown parameters.

The threshold value can be 'variable' or 'fixed' as described above for the first aspect as such.

In a sixth implementation form of the device according to the fourth or fifth implementation forms of the first aspect, for computing the precoding matrix and power level used by the interfering BS, the device is configured to calculate and evaluate a differential of the cost function with respect to a power level at a center of mass of power levels available at the interfering BS, and at the most recently calculated center of mass of precoding matrices.

By calculating the differential, also the number of possible power levels can be reduced. In total, the device is thus configured to achieve a reduced number of possibilities for pairs of a precoding matrix and a power level, from which pairs the desired unknown parameters can be then computed with significantly reduced complexity.

In a seventh implementation form of the system according to the sixth implementation form of the first aspect, for evaluating the differential of the cost function, the device is configured to: select a predetermined number of power levels, which are smaller than the center of mass of power levels available at the interfering BS, if the differential is positive, and select a predetermined number of power levels, which are larger than the center of mass of power levels available at the interfering BS, if the differential is negative.

With this selection, accurate results can be produced, while also a significant complexity reduction is achieved.

In an eighth implementation form of the device according to the seventh implementation form of the first aspect, the device is configured to calculate the precoding matrix and power level used by the interfering BS by an exhaustive search evaluating all pairs of a power level and precoding matrix, which can be formed with the predetermined number of power levels and with the precoding matrices corresponding to the most recently determined set of vectors.

The most recently determined set of vectors means that it is possible to carry out at least one additional calculation of a gradient, i.e. an iteration of the key pre-computation step. In this case, from the set of vectors determined with the last step of calculating a gradient, the exhaustive search is applied.

In a ninth implementation form of the device according to the first aspect as such or according to any of the previous implementation forms of the first aspect, the cost function is defined by $\|\hat{R} - R\|^2$, *wherein* $R$ is the sample covariance and $R$ is the exact covariance.

In a tenth implementation form of the device according to the first aspect as such or according to any of the previous implementation forms of the first aspect, the cost function represents a maximum likelihood criterion.

Thereby, even more accurate results may be obtained, particularly for practical implementations, since the cost function prevents exact but unlikely solutions.

In an eleventh implementation form of the device according to the tenth implementation form of the first aspect, the cost function is defined by $\det(\hat{R}) + \mathrm{Tr}(\hat{R}^{-1}R)$, *wherein* $R$ is the sample covariance and $R$ is the exact covariance.

In a twelfth implementation form of the device according to the first aspect as such or according to any of the previous implementation forms of the first aspect, the device is or is part of a user equipment, UE.

A second aspect of the present invention provides a method of characterizing a signal received from a serving base station, BS, in the presence of an interfering BS, the method comprising steps of: determining, from the signal, resource elements, REs, of a physical resource block, PRB, which both the serving BS and the interfering BS use for transmitting data, forming a sample covariance over the determined REs, forming a cost function based on the sample covariance and an exact covariance over the determined REs, calculating a gradient of the cost function with respect to a precoding matrix at a center of mass of precoding matrices available at the interfering BS, and at a center of mass of power levels available at the interfering BS, comparing the gradient with a plurality of vectors, each vector being formed by a combination of a precoding matrix and power level available at the interfering BS, determining a set of vectors, which have a direction that differs from a direction of the gradient by less than a threshold value, computing, from the set of vectors, a precoding matrix and power level used by the interfering BS.

In a first implementation form of the method according to the second aspect, comparing the gradient with the plurality of vectors includes calculating a projection of the gradient onto each one of the plurality of vectors.

In a second implementation form of the method according to the second implementation form of the first aspect, determining the set of vectors includes selecting a predetermined number of vectors, for which calculating the projections yields the smallest values.

In a third implementation form of the method according to the second implementation form of the second aspect, the predetermined number of vectors is between 10 and 20, preferably 15.

In a fourth implementation form of the method according to the second aspect as such or according to any of the previous implementation forms of the second aspect, computing the precoding matrix and power level used by the interfering BS includes calculating a new center of mass of precoding matrices corresponding to the set of vectors.

In a fifth implementation form of the method according to the fourth implementation form of the second aspect, computing the precoding matrix and power level used by the interfering BS comprises the steps of: calculating a further gradient of the cost function with respect to the precoding matrix at the new center of mass of precoding matrices, comparing the further gradient with each vector in the set of vectors, determine a new set of vectors, which have a direction that differs from the direction of the gradient by less than a threshold value, calculating a new center of mass of precoding matrices corresponding to the new set of vectors, and computing, from the new set of vectors, the precoding matrix and power level used by the interfering BS.

In a sixth implementation form of the method according to the fourth or fifth implementation forms of the second aspect, computing the precoding matrix and power level used by the interfering BS includes calculating and evaluating a differential of the cost function with respect to a power level at a center of mass of power levels available at the interfering BS, and at the most recently calculated center of mass of precoding matrices.

In a seventh implementation form of the system according to the sixth implementation form of the second aspect, evaluating the differential of the cost function comprises the steps of: selecting a predetermined number of power levels, which are smaller than the center of mass of power levels available at the interfering BS, if the differential is positive, and selecting a predetermined number of power levels, which are larger than the center of mass of power levels available at the interfering BS, if the differential is negative.

In an eighth implementation form of the method according to the seventh implementation form of the second aspect, the precoding matrix and power level used by the interfering BS are calculated by an exhaustive search evaluating all pairs of a power level and precoding matrix, which can be formed with the predetermined number of power levels and with the precoding matrices corresponding to the most recently determined set of vectors.

In a ninth implementation form of the method according to the second aspect as such or according to any of the previous implementation forms of the second aspect, the cost function is defined by $\|\hat{R} - R\|^2$, wherein $R$ is the sample covariance and $R$ is the exact covariance.

In a tenth implementation form of the method according to the second aspect as such or according to any of the previous implementation forms of the second aspect, the cost function represents a maximum likelihood criterion.

In an eleventh implementation form of the method according to the tenth implementation form of the second aspect, the cost function is defined by $\det(\hat{R}) + \mathrm{Tr}(\hat{R}^{-1}R)$, wherein $R$ is the sample covariance and $R$ is the exact covariance.

The method of the second aspects achieves all the effects and advantages described above for the device.

A third aspect of the present invention provides a computer program product for implementing, when carried out on a computing device, a method according to the above second aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

Fig. 1    shows a schematic overview of transmissions of a serving BS and an interfering BS received by a UE.

Fig. 2    shows a schematic overview of a device configured according to an embodiment of the present invention.

Fig. 3    shows a schematic overview of a specific method according to an embodiment of the present invention.

Fig. 4    shows numerical results for specific methods according to embodiments of the present invention.

DETAILED DESCRIPTION OF EMBODIMENTS

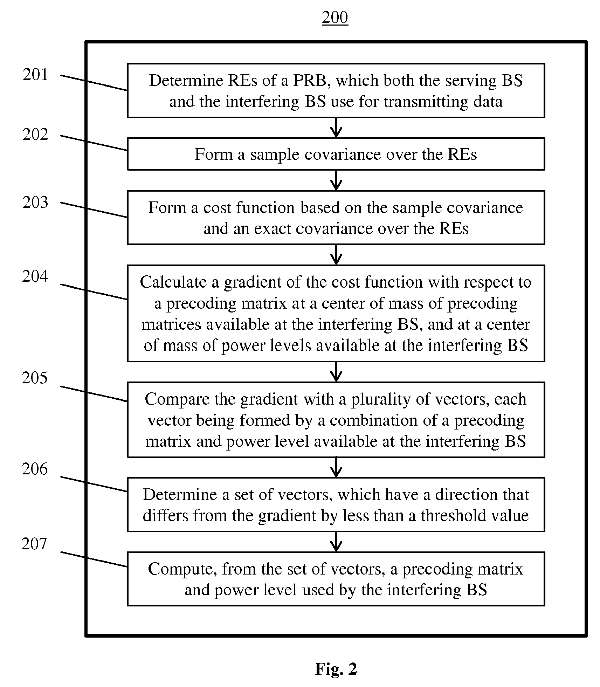

Fig. 2 shows a device 200 according to an embodiment of the present invention. The device is configured to characterize a signal received from a serving BS 101 in the presence of an interfering BS 102, i.e. a signal received in an identical situation as shown for the UE 100 (as device) in Fig. 1. To this end, the device 200 is configured to carry out a general method according to an embodiment of the present invention, i.e. a method of characterizing a signal received from a serving BS 101 in the presence of an interfering BS 102.

In particular, the device 200 is configured to determine, from the signal, REs of a PRB, which both the serving BS 101 and the interfering BS 102 use for transmitting data. This can, for instance be carried out by a determining unit 201 of the device 200, as shown exemplarily in Fig. 2.

The device 200 is further configured to form a sample covariance over the determined REs. This can, for instance, be carried out in a forming unit 202 of the device 200, as shown exemplarily in Fig. 2.

The device 200 is also configured to form a cost function based on the formed sample covariance, and an exact covariance over the determined REs. This can be done, for instance, by the forming unit 202 or by a further forming unit 203 of the device 200, as shown exemplarily in Fig. 2.

Further, the device 200 is configured to calculate a gradient of the cost function with respect to a precoding matrix at a center of mass of precoding matrices available at the interfering BS, and at a center of mass of power levels available at the interfering BS. This can, for instance, be carried out in a calculating unit 204 of the device 200, as shown exemplarily in Fig. 2.

The device 200 is also configured to compare the gradient with a plurality of vectors, each vector being formed by a combination of a precoding matrix and power level available at the interfering BS. This can, for instance, be carried out in a comparing unit 205 of the device 200, as shown exemplarily in Fig. 2.

Then, the device 200 is configured to determine a set of vectors, which have a direction that differs from the gradient by less than a threshold value (wherein the threshold can be 'variable' or 'fixed' as described above). This can, for instance, be carried out in the determining unit 201 or in a further determining unit 206 of the device 200, as shown exemplarily in Fig. 2.

Finally, the device 200 is configured to compute, from the set of vectors, a precoding matrix and power level used by the interfering BS 102. This can, for instance, be carried out in a computing unit 207 of the device 200, as shown exemplarily in Fig. 2.

All the above-described steps, which the device 200 is configured to carry out, can also be carried out by a central computing unit of the device 200, like a processor or a microprocessor or the like. That is, the units 201-207 shown exemplarily in Fig. 2 can be formed by or can be part of a single computing unit.

According to different embodiments of the present invention, four specific methods are presented in the following, all specific methods basing one the above-described general method of characterizing a signal received from a serving BS 101 in the presence of an interfering BS 102. All four specific methods share common features. The device 200 of Fig. 2 is preferably configured to carry out at least one, optionally even more or all of the specific methods. Which method a device 200 is configured to carry out, may e.g. be set by user input or may depend on the network type.

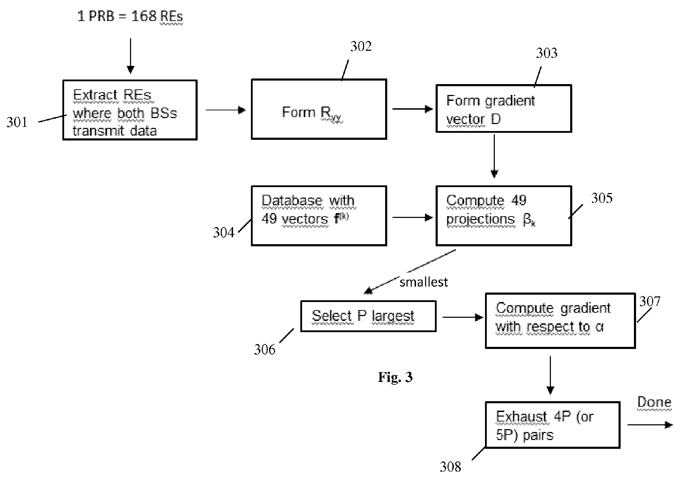

A first specific method carried out by a device 200 according to an embodiment of the present invention is described below. A schematic overview of selected steps of this first specific method, which the device 200 is configured to carry out, is shown in Fig. 3.

At first, as shown in step 301 of Fig. 3 and after a PRB has been selected, REs are extracted (i.e. determined) from the PRB, which both the serving BS 101 and the interfering BS 102 use for transmitting data. Then, a sample covariance is formed over the determined REs. The sample covariance for the first specific method is defined as in the above formula (3):

$$\hat{R}_{\mathbf{yy}} = \frac{1}{N} \sum_{k,l} \mathbf{y}_{kl} \mathbf{y}_{kl}^{H} \qquad (3)$$

Next, as shown in step 302 in Fig. 3, a cost function based on the sample covariance and based on an exact covariance over the determined REs is formed. In the first specific method, the exact covariance is defined as in the above formula (4), and the cost function is as defined in the above formula (5):

$$R_{\mathbf{yy}} = \alpha_1^2 \mathbf{H}_1 \mathbf{W}_1 \mathbf{W}_1^{H} \mathbf{H}_1^{H} + \alpha_2^2 \mathbf{H}_2 \mathbf{W}_2 \mathbf{W}_2^{H} \mathbf{H}_2^{H} + N_0 \mathbf{I} \qquad (4)$$

$$\arg\min_{\mathbf{W}_2, \alpha_2} \left\| \hat{R}_{\mathbf{yy}} - R_{\mathbf{yy}} \right\|^2 \qquad (5)$$

By introducing additional notation into the problem formulated according to the above formula (5), the minimization problem can be re-formulated according to the following formula (6):

$$\min_{\alpha, \mathbf{F}} \quad f(\alpha, \mathbf{F}) = \left\| \mathbf{A} - \alpha \mathbf{H} \mathbf{F} \mathbf{H}^{H} \right\|^2$$

Specifically, in the above formula (6):

- $\mathbf{A} = \hat{R}_{\mathbf{yy}} - \alpha_1^2 \mathbf{H}_1 \mathbf{W}_1 \mathbf{W}_1^{H} \mathbf{H}_1^{H} - N_0 \mathbf{I}$

- $\alpha = \alpha_2^2$

- $\mathbf{H} = \mathbf{H}_2$

- $\mathbf{F} = \mathbf{W}_2 \mathbf{W}_2^{H}$

The matrix **F** is a 4x4 Hermitean complex valued matrix, and is a matrix representative of the precoding matrix $\mathbf{W}_2$. For all 49 choices of **F** (compare in this respect the explanation provided further above), the main diagonal is identical. Thus, the number of dimension in the matrix **F** is 12 (i.e. there are at most 6 distinct complex numbers specifying each matrix **F**, due to the Hermitean constraint.)

Further, a priori, the mean (i.e. center of mass) of the 49 matrices **F** is not 0. Rather, the mean can be calculated according to the following formula (7):

$$\overline{\mathbf{F}} = \frac{1}{49} \sum_{k=1}^{49} \mathbf{F}_k \qquad (7)$$

In a similar manner, the mean (i.e. center of mass) $\overline{\alpha}$ for the power levels $\alpha$ can be calculated.

Now, the gradient of the function f($\alpha$, **F**) with respect to **F** at the center of mass $\overline{\mathbf{F}}$ of precoding matrices available at the interfering BS 102 (i.e. at **F** = $\overline{\mathbf{F}}$), and at the center of mass $\overline{\alpha}$ of power levels available at the interfering BS 102 can be calculated, particularly according to the following formula (8):

$$\nabla_{\mathbf{F}} f(\overline{\alpha}, \overline{\mathbf{F}}) = 4\mathbf{B} - 2 \, diag(\mathbf{B}) \quad where \quad \mathbf{B} = \overline{\alpha}^2 \mathbf{H}^{H} \mathbf{H} \overline{\mathbf{F}} \mathbf{H}^{H} \mathbf{H} - \overline{\alpha} \mathbf{H}^{H} \mathbf{A} \mathbf{H} \qquad (8)$$

The gradient of formula (8) can be viewed as a 12-dimensional real-valued vector, and can be compared with the 49 possible precoding matrices **F.** To this end, the gradient can, for example, be projected onto said 49 precoding matrices **F** as described in the following.

As shown in step 303 of Fig. 3, a 1 x 12 real-valued row vector of the gradient is defined to this end according to the following formula (9):

$$\mathbf{D} = [Re(B_{12}) \quad -Im(B_{12}) \quad Re(B_{13}) \quad -Im(B_{13}) \quad Re(B_{14}) \quad -Im(B_{14}) \quad Re(B_{23}) \quad -Im(B_{23})$$

$$Re(B_{24}) \quad -Im(B_{24}) \quad Re(B_{34}) \quad -Im(B_{34})] \qquad (9)$$

In the formula (9), Re(x) and Im(x) denote the real and imaginary parts of a number x, and $B_{kl}$ is an element (k, 1) of the matrix **B** of formula (8).

In a similar manner, the 49 matrices **F** can be expressed as a plurality of vectors according to the following formula (10):

$$\mathbf{f} = [Re(F_{12}) \quad -Im(F_{12}) \quad Re(F_{13}) \quad -Im(F_{13}) \quad Re(F_{14}) \quad -Im(F_{14}) \quad Re(F_{23}) \quad -Im(F_{23}) \quad Re(F_{24})$$

$$-Im(F_{24}) \quad Re(F_{34}) \quad -Im(F_{34})] \qquad (10)$$

As show in step 304 of Fig. 3, a database with these 49 vectors **f** can be established, for instance in the device 200.

If further $\mathbf{f}^{(k)}$ is chosen to denote the kth vector out of the total 49 vectors **f**, the 49 projections can be computed, as shown in step 305 of Fig. 3, and can then be evaluated according to the following formula (11):

$$\beta_k = \mathbf{D}(\mathbf{f}^{(k)})^T \qquad (11)$$

Since the function f($\alpha$, **F**) is to be minimized, as shown in step 306 of Fig. 3, the P smallest values of $\beta_k$ are preferably collected. This means that a set of P vectors, which vectors have a direction that differs from the gradient by less than a threshold value, is determined. Thereby, the threshold value is determined by the P smallest values, i.e. is a 'variable' threshold, which depends on the calculated values. Alternatively, a fixed threshold value can be used, i.e. all vectors within a 'fixed' threshold value may be collected.

It is further noteworthy that the $\mathbf{f}^{(k)}$ are fixed vectors, and that many of these vectors have identical elements at the very same positions. Therefore, at least parts of the computation required for evaluating the 49 projections $\beta_k$ can be reused, and therefore the computation is of overall low complexity.

For notational convenience can be further assumed that the vectors $\mathbf{f}^{(k)}$ are ordered such that the first P values of them correspond to the **P** smallest $\beta_k$. Finally, the precoding matrix and power level used by the interfering BS 102 for transmitting data can be calculated from the set of vectors **f** as described below.

The center of mass of precoding matrices can be re-computed corresponding to the set of vectors according to the following formula (12):

$$\overline{\overline{\mathbf{F}}} = \frac{1}{P}\sum_{k=1}^{P}\mathbf{F}_k \qquad (12)$$

At this new center of mass, a differential (i.e. gradient) of the cost function, formulated as f($\alpha$, **F**), with respect to $\alpha$ at the center of mass $\overline{\alpha}$ of the power levels available at the interfering BS 102 can be calculated (i.e. at $\alpha = \overline{\alpha}$), as shown in step 307 of Fig. 3, according to the following formula (13):

$$\frac{\partial}{\partial\alpha}f(\overline{\alpha},\overline{\overline{\mathbf{F}}}) = -Tr\left[\mathbf{B}^{-1}\overline{\alpha}\mathbf{H}\overline{\overline{\mathbf{F}}}\mathbf{H}^{H}(\mathbf{I}-\mathbf{B}^{-1}\hat{R}_{YY})\right] \qquad \mathbf{B} = \mathbf{A} + \overline{\alpha}\mathbf{H}\overline{\overline{\mathbf{F}}}\mathbf{H}^{H} \qquad (13)$$

If this differential is positive, the 5 values smaller than $\overline{\alpha}$ are preferably selected for further evaluation. Otherwise, the 4 larger values are preferably selected. It is noted in this respect, that since the $\alpha$ values are given in advance, it is known that there are 4 values larger than $\overline{\alpha}$ and that there are 5 values smaller than $\overline{\alpha}$.

Accordingly, at this point of the first specific method, as shown in step 308 of Fig. 3, there remain 4P or 5P pairs of $\alpha$ and **F** to evaluate the metric f($\alpha$, **F**) for. This can finally be done by an exhaustive search, i.e. by a brute force computation.

A second specific method according to an embodiment of the present invention is described below. The second specific method is iterative, and follows the first specific method verbatim up to and including the formula (12), i.e. to the re-computation of the center of mass of precoding matrices. After said re-computation according to the formula (12), the second specific method takes a different path, which aims at further reducing the number of vectors.

This can be achieved by computing a further gradient of the cost function with respect to **F** at the updated center of mass $\overline{\overline{\mathbf{F}}}$ of precoding matrices (i.e. at $\mathbf{F} = \overline{\overline{\mathbf{F}}}$). Thus, after the formula (12), the second specific method proceeds with a calculation according to the following formula (13):

$$\nabla_{\mathbf{F}} f(\overline{\alpha}, \overline{\overline{\mathbf{F}}}) = 4\mathbf{B} - 2diag(\mathbf{B}) \quad where \quad \mathbf{B} = \overline{\alpha}^2 \mathbf{H}^H \mathbf{H} \overline{\overline{\mathbf{F}}} \mathbf{H}^H \mathbf{H} - \overline{\alpha} \mathbf{H}^H \mathbf{A} \mathbf{H} \quad (13)$$

Then, the 1x12 vector D (see the above definition according to formula (9)), however, corresponding to the matrix **B** of formula (13) is formed similar as in the first specific method, and is compared with each vector in the set of vectors. That means that the P projections according the following formula (14) are evaluated:

$$\beta_k = \mathbf{D}(\mathbf{f}^{(k)})^T, \quad k = 1....P \quad (14)$$

Now, a new set of vectors, which vectors have a direction differing from the direction of the gradient by less than a threshold value $P_2$, are determined. To this end, the $P_2$ smallest of the P projections are preferably selected. Again, it is assumed that the first $P_2$ vectors **f** are such that they produce the smallest $P_2$ values of $\beta_k$.

Now, an updated center of mass of precoding matrices corresponding to the new set of vectors can be computed, i.e. given the $P_2$ pre-coders **F,** according to the following formula (15):

$$\overline{\overline{\mathbf{F}}} = \frac{1}{P_2} \sum_{k=1}^{P_2} \mathbf{F}_k \quad (15)$$

After this step, the same procedure as for the first specific method is followed, but with $P_2$ replacing P, and $\overline{\overline{\mathbf{F}}}$ replacing $\overline{\overline{\mathbf{F}}}$ for the calculation of a differential corresponding to the differential calculated according to formula (13).

A third specific method according to an embodiment of the present invention is described below. The third specific method is identical to the first specific method, i.e., it is not iterative like the second specific method, but it is uses a different cost function.

The cost function used is the maximum likelihood criteria, which replaces the cost function of the first specific method according to the following formula (16):

$$f(\alpha, \mathbf{F}) = \det(\hat{R}_{yy}) + Tr(\hat{R}_{yy}^{-1} R_{yy}) \quad (16)$$

The above formula (16) depends on **F** and $\alpha$ through $R_{yy}$ (see above).

Because the third specific method is similar to the first specific method, wherein only the gradient is different, the third specific method can be executed verbatim to the first specific method with a gradient according to the following formula (17):

$$\nabla_{\mathbf{F}} f(\alpha, \mathbf{F}) = 2\mathbf{B}^{-1} \mathbf{H}^{-1} \mathbf{R}_{YY} (\mathbf{H}^H)^{-1} \mathbf{B}^{-1}$$
$$- diag(\mathbf{B}^{-1} \mathbf{H}^{-1} \mathbf{R}_{YY} (\mathbf{H}^H)^{-1} \mathbf{B}^{-1}) - 2\mathbf{B}^{-1} + diag(\mathbf{B}^{-1})$$
$$\mathbf{B} = \mathbf{H}^{-1} \mathbf{A} (\mathbf{H}^H)^{-1} + \alpha \mathbf{F} \quad (17)$$

Since the first and third specific methods differ only in the cost function, and accordingly the gradient computed from the respective cost functions, Fig. 2 shows also operations for the third specific method.

A fourth specific method according to an embodiment of the present invention is described below. The fourth specific method is similar to the second specific method, except that the cost function (and therefore also the gradient) from the third specific method is used. All other operations are identical.

With the present invention, only 4P (or respectively 5P) cost functions need to be evaluated for the first and third specific methods, while only $4P_2$ (or respectively $5P_2$) cost functions need to be evaluated for the second and fourth specific methods.

The values of P and $P_2$ can be much lower than the at least 49 conventional values (i.e. the number for a conventional exhaustive search). Preferably, the predetermined number P of vectors is between 10 and 20, most preferably 15. Preferably, $P_2$ is around 5. Accordingly, the complexity of the calculation is grossly reduced with the present invention. The remaining values can be obtained much faster and more effectively.

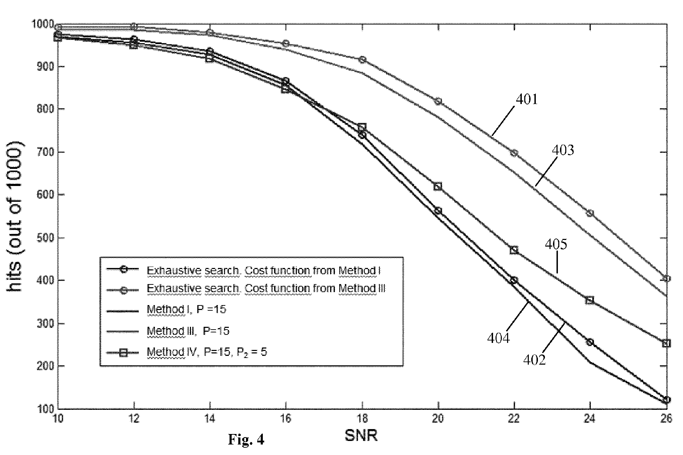

Fig. 4 shows numerical results for the first, third and fourth specific methods. The curves 401 and 402 marked by circles are exhaustive searches based on the two different cost functions, which are explored in the present invention as described above. Specifically, curve 401 is for the cost function of the third specific method, and curve 402 is for the cost function of the first specific method.

On the y-axis, a number of hits is shown, i.e. the number of occasions, for which both the power level and the precoding matrix are correctly determined. On the x-axis the signal to noise ratio (SNR) of the serving BS 101 is shown. As the SNR increases, the interfering BS 102 drowns in the signal of the serving BS 101, which leads to poorer performance.

As can be seen from the curves 403 and 404, with a predetermined P = 15 (i.e. a complexity reduction of around 70%) the same performance and accuracy as with the exhaustive searches represented by the curves 401 and 402, respectively, can be achieved. As shown by the curve 405, for particularly the fourth specific method a very good performance can already be achieved with a predetermined $P_2$ = 5 (which corresponds even to a complexity reduction of around 90%).

The present invention is not only directed to a device 200, which is configured according to Fig. 2 to carry out the general method, or is configured to carry out at least one of the first to fourth specific methods, but is also directed to the general and specific methods themselves, as shown, for instance in the Figs. 2 and 3, and as described above.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. Device (200) for characterizing a signal received from a serving base station, BS, (101) in the presence of an interfering BS (102), the device (200) being configured to:

   determine (201), from the signal, resource elements, REs, of a physical resource block, PRB, which both the serving BS (101) and the interfering BS (102) use for transmitting data,
   form (202) a sample covariance over the determined REs,
   form (203) a cost function based on the sample covariance and an exact covariance over the determined REs,
   calculate (204) a gradient of the cost function with respect to a precoding matrix at a center of mass of precoding matrices available at the interfering BS (102), and at a center of mass of power levels available at the interfering BS (102),
   compare (205) the gradient with a plurality of vectors, each vector being formed by a combination of a precoding matrix and power level available at the interfering BS (102),
   determine (206) a set of vectors, which have a direction that differs from the gradient by less than a threshold value,
   compute (207), from the set of vectors, a precoding matrix and power level used by the interfering BS (102).

2. Device (200) according to claim 1, wherein
   for comparing the gradient with the plurality of vectors, the device (200) is configured to calculate a projection of the gradient onto each one of the plurality of vectors.

3. Device (200) according to claim 2, wherein
   for determining the set of vectors, the device (200) is configured to select a predetermined number of vectors, for which calculating the projections yields the smallest values.

**4.** Device (200) according to claim 3, wherein the predetermined number of vectors is between 10 and 20, preferably 15.

**5.** Device (200) according to one of the claims 1 to 4, wherein
for computing the precoding matrix and power level used by the interfering BS (102), the device (200) is configured to calculate a new center of mass of precoding matrices corresponding to the set of vectors.

**6.** Device (200) according to claim 5, wherein
for computing the precoding matrix and power level used by the interfering BS (102), the device (200) is further configured to:

calculate a further gradient of the cost function with respect to the precoding matrix at the new center of mass of precoding matrices,
compare the further gradient with each vector in the set of vectors,
determine a new set of vectors, which have a direction that differs from the direction of the gradient by less than a threshold value,
calculate a new center of mass of precoding matrices corresponding to the new set of vectors, and
compute, from the new set of vectors, the precoding matrix and power level used by the interfering BS (102).

**7.** Device (200) according to claim 5 or 6, wherein
for computing the precoding matrix and power level used by the interfering BS (102), the device (200) is configured to calculate and evaluate a differential of the cost function with respect to a power level at a center of mass of power levels available at the interfering BS (102), and at the most recently calculated center of mass of precoding matrices.

**8.** Device (200) according to claim 7, wherein
for evaluating the differential of the cost function, the device (200) is configured to:

select a predetermined number of power levels, which are smaller than the center of mass of power levels available at the interfering BS (102), if the differential is positive, and
select a predetermined number of power levels, which are larger than the center of mass of power levels available at the interfering BS (102), if the differential is negative.

**9.** Device (200) according to claim 8, wherein
the device (200) is configured to calculate the precoding matrix and power level used by the interfering BS (102) by an exhaustive search evaluating all pairs of a power level and precoding matrix, which can be formed with the predetermined number of power levels and with the precoding matrices corresponding to the most recently determined set of vectors.

**10.** Device (200) according to one of the claims 1 to 9, wherein
the cost function is defined by $\|\hat{R} - R\|^2$, wherein $\hat{R}$ is the sample covariance and $R$ is the exact covariance.

**11.** Device (200) according to one of the claims 1 to 10, wherein
the cost function represents a maximum likelihood criterion.

**12.** Device (200) according to claim 11, wherein
the cost function is defined by $\det(\hat{R}) + \mathrm{Tr}(\hat{R}^{-1}R)$, wherein $\hat{R}$ is the sample covariance and $R$ is the exact covariance.

**13.** Device (200) according to one of the claims 1 to 12, wherein the device is or is part of a user equipment, UE (100).

**14.** Method of characterizing a signal received from a serving base station, BS, (101) in the presence of an interfering BS (102), the method comprising steps of:

determining (201), from the signal, resource elements, REs, of a physical resource block, PRB, which both the serving BS (101) and the interfering BS (102) use for transmitting data,
forming (202) a sample covariance over the determined REs,
forming (203) a cost function based on the sample covariance and an exact covariance over the determined REs,
calculating (204) a gradient of the cost function with respect to a precoding matrix at a center of mass of precoding matrices available at the interfering BS (102), and at a center of mass of power levels available at the interfering BS (102),

comparing (205) the gradient with a plurality of vectors, each vector being formed by a combination of a precoding matrix and power level available at the interfering BS (102),

determining (206) a set of vectors, which have a direction that differs from a direction of the gradient by less than a threshold value,

computing (207), from the set of vectors, a precoding matrix and power level used by the interfering BS (102).

15. Computer program product for implementing, when carried out on a computing device, a method according to claim 14.

Fig. 1

<u>200</u>

Determine REs of a PRB, which both the serving BS
and the interfering BS use for transmitting data

Form a sample covariance over the REs

Form a cost function based on the sample covariance
and an exact covariance over the REs

Calculate a gradient of the cost function with respect to
a precoding matrix at a center of mass of precoding
matrices available at the interfering BS, and at a center
of mass of power levels available at the interfering BS

Compare the gradient with a plurality of vectors, each
vector being formed by a combination of a precoding
matrix and power level available at the interfering BS

Determine a set of vectors, which have a direction that
differs from the gradient by less than a threshold value

Compute, from the set of vectors, a precoding matrix
and power level used by the interfering BS

**Fig. 2**

1 PRB = 168 REs

↓

301 — **Extract REs where both BSs transmit data** → **Form $R_{yy}$** (302) → **Form gradient vector D** (303)

↓

**Database with 49 vectors $f^{(k)}$** (304) → **Compute 49 projections $\beta_k$** (305)

↓ smallest

**Select P largest** (306) → **Compute gradient with respect to $\alpha$** (307)

↓

**Exhaust 4P (or 5P) pairs** (308) → Done

**Fig. 3**

Fig. 4

Europäisches
Patentamt

European
Patent Office

Office européen
des brevets

# EUROPEAN SEARCH REPORT

Application Number

EP 15 19 6048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/326290 A1 (HARRISON MARK [US] ET AL) 12 November 2015 (2015-11-12) * paragraphs [0105], [0113], [0114]; figure 22 * | 1-15 | INV. H04B7/04 H04B17/30 |
| A | INTEL CORPORATION: "Discussion on PDSCH interference signal parameters detection for NAICS", 3GPP DRAFT; R4-140609 - INTEL - NAICS PDSCH PARAMETERS DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG4, no. Prague, Czech Republic; 20140210 - 20140214 9 February 2014 (2014-02-09), XP050740315, Retrieved from the Internet: URL:http://www.3gpp.org/ftp/Meetings_3GPP_SYNC/RAN/RAN4/Docs/ [retrieved on 2014-02-09] * the whole document * | 1-15 | |
| A | "3rd Generation Partnership Project; Technical Specification Group Radio Access Network; Network-Assisted Interference Cancellation and Suppression for LTE (Release 12)", 3GPP STANDARD; 3GPP TR 36.866, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V1.1.0, 16 December 2013 (2013-12-16), pages 1-59, XP050728727, [retrieved on 2013-12-16] * the whole document * | 1-15 | TECHNICAL FIELDS SEARCHED (IPC) H04B |

The present search report has been drawn up for all claims

| Place of search | Date of completion of the search | Examiner |
|---|---|---|
| Munich | 3 May 2016 | Akbudak, Tarik |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 15 19 6048

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2016

| Patent document cited in search report | Publication date | Patent family member(s) | Publication date |
|---|---|---|---|
| US 2015326290 A1 | 12-11-2015 | US 2015326290 A1<br>WO 2015170223 A1 | 12-11-2015<br>12-11-2015 |

EPO FORM P0459

For more details about this annex : see Official Journal of the European Patent Office, No. 12/82